# FASCICULE DE BREVET EUROPEEN

(11) **EP 1 636 053 B1**
(45) Date de publication et mention de la délivrance du brevet: **31.01.2007**
(21) Numéro de dépôt: 99957290.2
(22) Date de dépôt: 08.11.1999
(51) Int. Cl.: B60C 19/08, B60C 11/00

(54) **UNE BANDE DE ROULEMENT POUR PNEUMATIQUE ET UN PNEUMATIQUE COMPORTANT CELLE-CI**
LAUFFLÄCHE FÜR REIFEN UND REIFEN MIT DERSELBEN
RUNNING TREAD FOR TYRE AND TYRE COMPRISING SAME

(30) Priorité: 09.11.1998 FR 9814113
(43) Date de publication de la demande: 22.03.2006
(73) Titulaire: Société de Technologie Michelin, 63000 Clermont-Ferrand Cedex 09 (FR); MICHELIN Recherche et Technique S.A., 1763 Granges-Paccot (CH)
(72) Inventeur: POULBOT, Valéry, F-63430 Les Martres d'Artiere (FR)
(74) Mandataire: Ribière, Joel
(86) Numéro de dépôt international: PCT/EP1999/008555
(87) Numéro de publication internationale: WO 2000/027655

(56) Documents cités:
- EP-A- 0 718 126
- EP-A- 0 732 229
- EP-A- 0 754 574
- EP-A- 0 853 010
- EP-A- 0 895 878
- GB-A- 544 757
- US-A- 2 342 576
- US-A- 5 518 055

## Description

La présente invention concerne une bande de roulement pour pneumatique et un pneumatique comportant celle-ci.

L'invention s'applique notamment au bon fonctionnement des appareils électroniques qui sont embarqués sur un véhicule équipé de tels pneumatiques, en particulier sur un véhicule de type tourisme. Ainsi, l'invention s'applique par exemple à la qualité de la réception d'ondes radio à partir d'un appareil radio prévu à l'intérieur d'un tel véhicule, et/ou à la fiabilité d'un dispositif électronique prévu à l'intérieur d'un pneumatique équipant ce véhicule.

On sait que les pneumatiques d'un véhicule se chargent et se déchargent par effet triboélectrique en roulage, et que la charge et la décharge correspondantes interfèrent parfois via des perturbations électromagnétiques, dans des conditions météorologiques particulières, avec l'électronique embarquée sur le véhicule, par exemple avec un appareil radio qui est embarqué dans le véhicule, et plus particulièrement lorsque ledit appareil est utilisé en modulation d'amplitude.

Il se produit notamment, lors du passage d'un premier tronçon de roulage à un second tronçon de roulage qui lui succède et qui présente des caractéristiques physiques différant de celles dudit premier tronçon, par exemple une conductivité électrique et/ou une structure et/ou un relief différents, une décharge brutale par la bande de roulement de chaque pneumatique de la charge accumulée sur ledit premier tronçon.

De tels tronçons successifs de roulage peuvent par exemple être respectivement constitués d'un matériau électriquement isolant, tel que de l'asphalte, et d'un matériau électriquement conducteur, tel que celui utilisé pour des joints métalliques d'un pont, pour des plaques d'égout ou pour des rails de chemins de fer.

On sait également que ces décharges brutales et les perturbations électromagnétiques pouvant en résulter sont d'autant plus marquées que le matériau constituant la bande de roulement est notamment plus électriquement isolant, lors du passage en roulage d'un même premier tronçon à un même second tronçon.

Or, il se trouve que nombre de pneumatiques actuels sont caractérisés par une teneur élevée en charge renforçante non électriquement conductrice, telle que la silice, avec comme effet avantageux recherché de réduire les pertes hystérétiques en roulage et, par conséquent, la résistance au roulement des pneumatiques, en sorte que la consommation de carburant du véhicule correspondant est également réduite.

Un inconvénient de ces pneumatiques réside dans la résistivité relativement élevée du matériau de la bande de roulement, ce qui a parfois pour effet de générer lesdites perturbations électromagnétiques, sous certaines conditions météorologiques.

US-A-2 342 576 montre un pneumatique avec une couche conductrice entre la bande de roulement et la carcasse pour décharger l'éléctricité statique.

Le but de la présente invention est de proposer une bande de roulement pour pneumatique et un pneumatique comportant celle-ci, ladite bande de roulement, à base d'une matière électriquement isolante, étant délimitée latéralement par deux faces latérales reliant des faces radialement interne et externe entre elles, qui permettent de minimiser, lors du passage dudit premier tronçon audit second tronçon, la puissance des décharges électrostatiques de la bande de roulement de chaque pneumatique et donc de minimiser les perturbations électrostatiques précitées.

A cet effet, une bande de roulement pour pneumatique selon l'invention comporte sur sa circonférence au moins une couche conductrice reliant sensiblement lesdites faces latérales entre elles, ladite couche présentant une résistivité inférieure à celle de ladite matière isolante, laquelle est prévue des deux côtés de ladite ou de chaque couche dans ladite bande de roulement.

Cette structure de bande de roulement, lorsqu'elle est utilisée pour un train de pneumatiques équipant un véhicule avec récepteur radio embarqué, permet notamment de réduire d'une manière significative les interférences radio qui peuvent être perçues en modulation d'amplitude, lors d'un roulage sur des éléments de route électriquement conducteurs, sous certaines conditions météorologiques.

Selon une variante de réalisation selon l'invention, ladite ou chaque couche conductrice relie sensiblement lesdites faces latérales entre elles, de telle manière qu'elle soit interrompue en regard de l'une au moins de celles-ci.

Selon une autre variante de réalisation selon l'invention, ladite ou chaque couche conductrice relie sensiblement lesdites faces latérales entre elles, de telle manière qu'elle soit interrompue en regard desdites faces radialement interne et externe.

Selon une autre caractéristique de l'invention, ladite ou chaque couche conductrice est sensiblement parallèle à ladite face externe.

Selon une autre caractéristique de l'invention, ladite bande de roulement comporte une seule couche conductrice prévue à une distance de l'une et de l'autre desdites faces interne et externe qui est supérieure ou égale au quart de l'épaisseur de ladite bande de roulement.

De préférence, ladite distance est égale à la moitié de l'épaisseur de ladite bande de roulement.

De préférence, la résistivité de ladite couche conductrice est prévue inférieure ou égale à 10⁸ Ω.cm, la résistivité de ladite matière isolante étant prévue supérieure ou égale à 10⁸ Ω.cm.

Selon un mode particulier de réalisation de l'invention, ladite bande de roulement comporte en outre au moins un film conducteur qui est prévu pour relier électriquement lesdites faces interne et externe entre elles.

De préférence, ladite bande de roulement comporte alors deux films conducteurs qui sont respectivement prévus aux emplacements desdites faces latérales.

A titre encore plus préférentiel pour ce mode de réalisation, lesdits films se prolongent respectivement sur ladite face externe par deux bandes périphériques circonférentielles électriquement conductrices.

Selon une variante de ce mode particulier de réalisation de l'invention, ladite bande de roulement comporte entre lesdites faces latérales au moins un film électriquement conducteur qui relie lesdites faces interne et externe entre elles.

Selon une autre variante de ce mode particulier de réalisation de l'invention, ladite bande de roulement comporte, d'une part, au moins un ruban conducteur interne reliant ladite ou chaque couche conductrice à ladite face radialement interne et, d'autre part, au moins un ruban conducteur externe reliant ladite ou chaque couche conductrice à ladite face radialement externe.

Un pneumatique selon l'invention est tel qu'il comporte ladite bande de roulement selon l'invention.

Les caractéristiques précitées de la présente invention, ainsi que d'autres, seront mieux comprises à la lecture de la description suivante d'un exemple de réalisation de l'invention, donné à titre illustratif et non limitatif, ladite description étant réalisée en relation avec les dessins joints, parmi lesquels:
la Fig. 1 est une vue schématique en section radiale d'une bande de roulement selon un premier mode de réalisation de l'invention,
la Fig. 2 est une vue schématique en section radiale d'une bande de roulement selon un second mode de réalisation de l'invention,

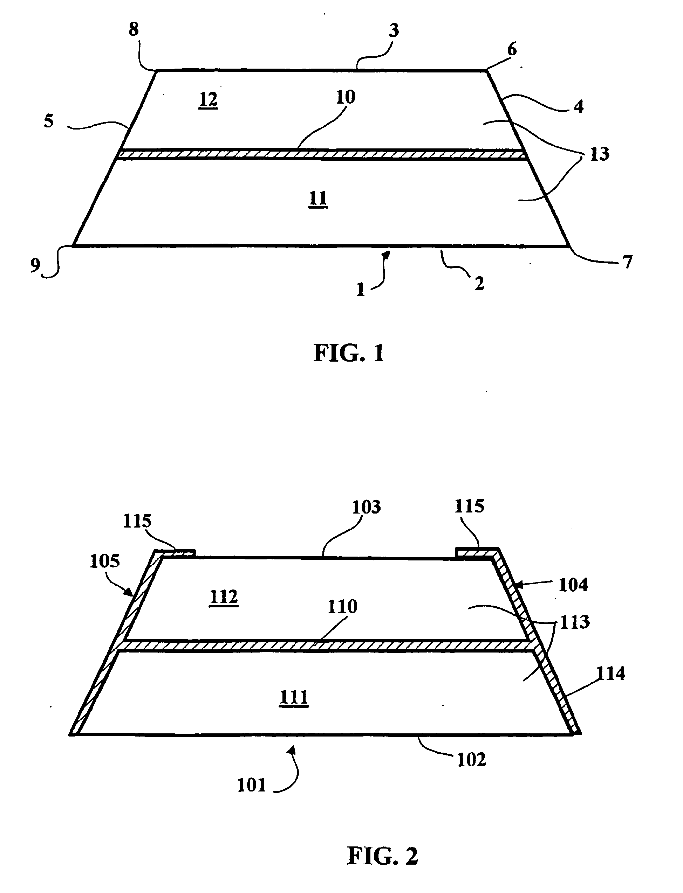

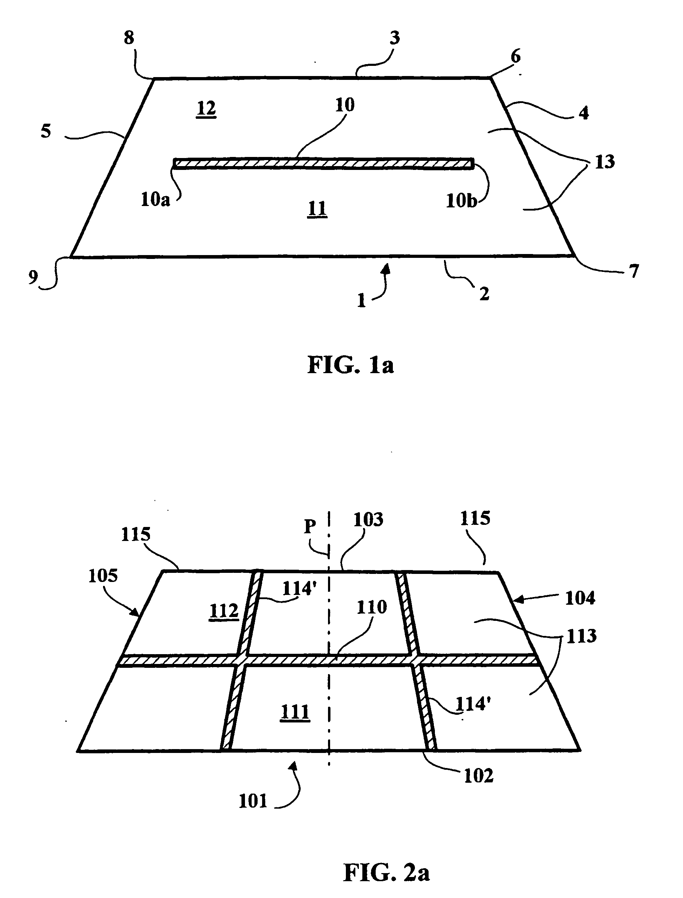

la Fig. 1a est une vue schématique en section radiale d'une bande de roulement selon une première variante dudit premier mode de réalisation de l'invention,
la Fig. 2a est une vue schématique en section radiale d'une bande de roulement selon une première variante dudit second mode de réalisation de l'invention,

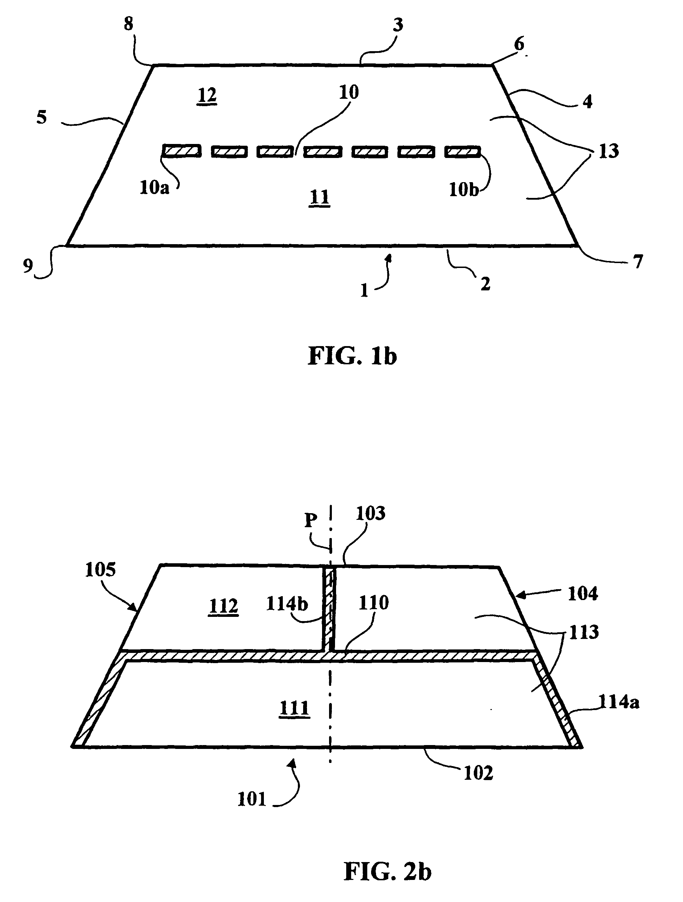

la Fig. 1b est une vue schématique en section radiale d'une bande de roulement selon une seconde variante dudit premier mode de réalisation de l'invention,
la Fig. 2b est une vue schématique en section radiale d'une bande de roulement selon une seconde variante dudit second mode de réalisation de l'invention,

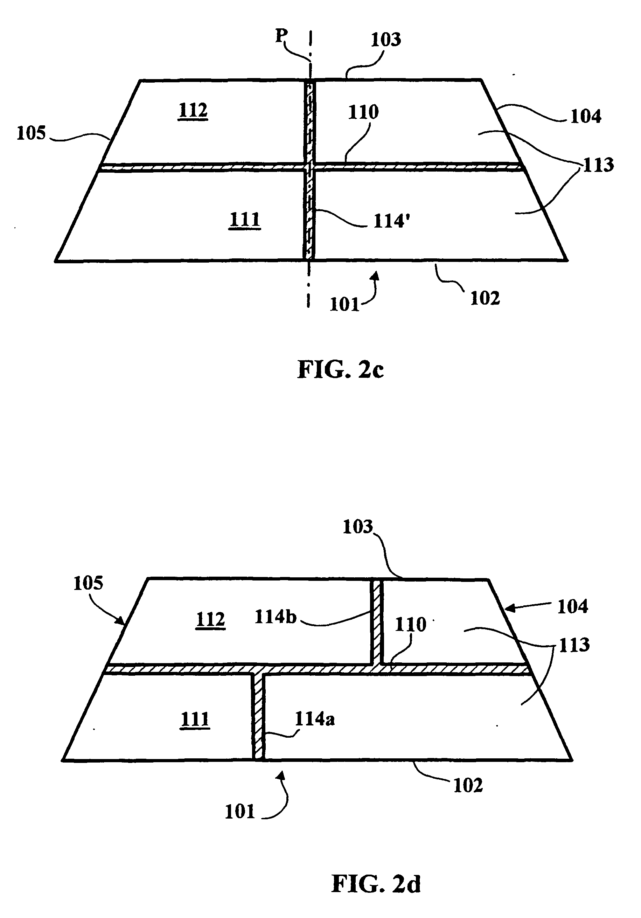

la Fig. 2c est une vue schématique en section radiale d'une bande de roulement selon une troisième variante dudit second mode de réalisation de l'invention,
la Fig. 2d est une vue schématique en section radiale d'une bande de roulement selon une quatrième variante dudit second mode de réalisation de l'invention, et

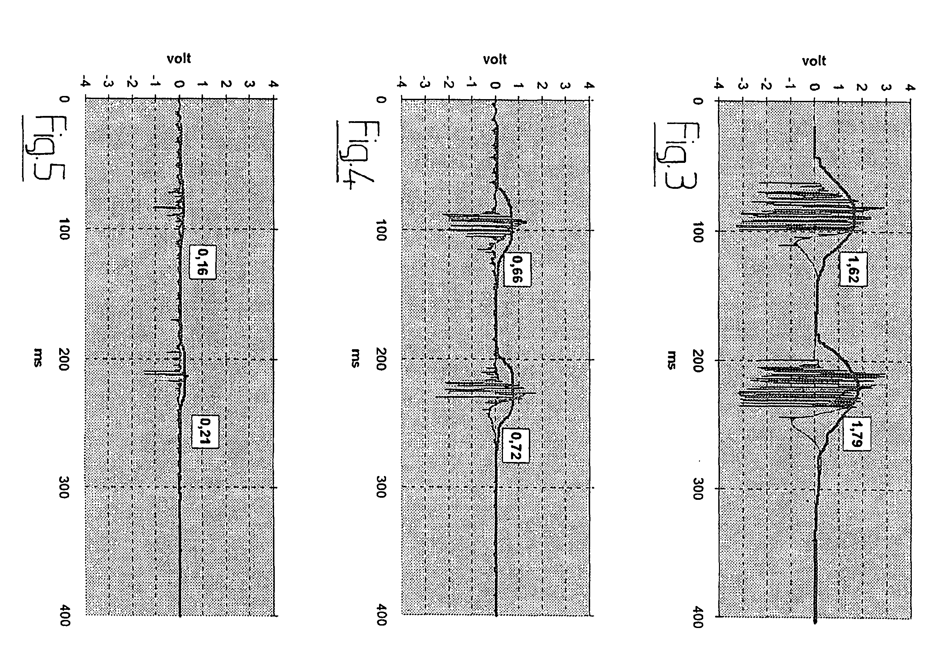

les Figs. 3, 4 et 5 sont des graphiques expérimentaux illustrant le niveau sonore des interférences radio en modulation d'amplitude qui ont été perçues dans des conditions identiques, respectivement pour un roulage avec des pneumatiques à bande de roulement traditionnelle, à bande de roulement selon la Fig. 1 et à bande de roulement selon la Fig. 2.

La bande de roulement 1 représentée à la Fig. 1 présente une section radiale sensiblement trapézoïdale uniquement à des fins de simplification. On comprendra qu'elle pourrait présenter toute forme jugée appropriée, sculptures comprises, pour le type de pneumatique choisi.

Cette bande de roulement 1 est délimitée par une face radialement interne 2, destinée à se trouver en regard des différentes armatures d'un pneumatique (non représentées), par une face radialement externe 3, destinée à évoluer au contact du sol en roulage, et par deux faces latérales 4 et 5 reliant les deux paires de bords latéraux en regard 6, 7 et 8, 9 desdites faces 2 et 3 entre elles.

La bande de roulement 1 est à base d'une matière électriquement isolante, par exemple comprenant une charge renforçante non conductrice, telle que de la silice.

Comme on peut le voir dans l'exemple de la Fig. 1, la bande de roulement 1 comporte, sur sa circonférence, une couche conductrice 10 qui relie sensiblement lesdites faces latérales 4 et 5 entre elles, de telle manière que la matière isolante précitée soit prévue des deux côtés 11 et 12 de ladite couche 10.

Dans l'exemple de la Fig. 1, la bande de roulement 1 comporte une unique couche conductrice 10 qui est prévue sensiblement parallèle à ladite face externe 3.

Cependant, une bande de roulement 1 selon l'invention pourrait comporter une pluralité de telles couches conductrice 10, pourvu que ladite matière isolante soit prévue des deux côtés de chaque couche 10.

Plus précisément, la couche conductrice 10 relative à l'exemple de la Fig. 1 est située à une distance de l'une ou de l'autre desdites faces interne et externe 2, 3 qui est de préférence supérieure ou égale au quart de l'épaisseur de la bande de roulement 1.

Comme on peut le voir dans cet exemple de réalisation, ladite couche conductrice 10 est à titre encore plus préférentiel prévue à égale distance desdites faces interne et externe 2 et 3.

On notera qu'une couche conductrice 10 selon l'invention est caractérisée par une résistivité inférieure à celle de la zone 13 occupée par ladite matière isolante, dans la bande de roulement 1.

A titre d'exemple, la résistivité de ladite couche conductrice 10 est prévue inférieure ou égale à 10⁸ Ω.cm, alors que la résistivité de ladite matière isolante est prévue supérieure ou égale à 10⁸ Ω.cm.

La couche conductrice 10 est par exemple constituée d'un mélange d'élastomères chargé de noir de carbone, la teneur de noir de carbone étant fixée en fonction de la résistivité recherchée.

Selon une variante de réalisation de cette couche conductrice 10, celle-ci peut être obtenue à partir d'une solution liquide qui est appliquée sur l'une des parties 11, 12 de la bande de roulement 1, ladite solution comprenant un mélange électriquement conducteur et un solvant de dilution.

De plus, ladite couche conductrice 10 peut présenter une épaisseur variable par rapport à celle de la bande de roulement, par exemple avantageusement comprise entre 0,5 mm et 2,5 mm, pour une épaisseur totale de bande de roulement 1 d'environ 1,2 cm en moyenne.

Des essais ont été réalisés avec des pneumatiques comportant chacun une bande de roulement 1 du type de celle illustrée à la Fig. 1.

On a ainsi mis en évidence, à l'intérieur d'un véhicule équipé d'un récepteur radio fonctionnant en modulation d'amplitude et testé en roulage sur une route comportant des tronçons métalliques, tels que des bouches d'égout et/ou des joints métalliques de pont, une réduction significative de la décharge électrostatique lors de l'entrée sur ces tronçons et, par voie de conséquence, des interférences radio qui peuvent être perçues, sous certaines conditions météorologiques.

Il en résulte une amélioration notable du confort d'écoute pour les passagers.

La Fig. 2 illustre un second mode de réalisation de la bande de roulement 1 de la Fig. 1, les éléments de cellé-ci qui y sont repris à l'identique étant respectivement identifiés par des références numériques augmentées de 100.

Une bande de roulement 101 selon la Fig. 2 se distingue de ladite bande de roulement 1, en ce qu'elle comporte en outre au moins un film conducteur radial 114 qui est prévu pour relier électriquement la face externe 103 à la face interne 102 de ladite bande 101.

Dans l'exemple de réalisation de la Fig. 2, on peut voir que la bande de roulement 101 comporte deux films conducteurs 114 qui sont respectivement prévus aux emplacements des faces latérales 104 et 105 de ladite bande 101 et qui, de préférence, se prolongent respectivement sur ladite face externe 103 par deux bandes périphériques circonférentielles 115, également conductrices et de largeur variable.

On notera que ces films conducteurs 114 peuvent présenter une épaisseur différente de celle de ladite couche conductrice 110.

Quant à la résistivité desdits films 114, elle est de préférence sensiblement égale à celle de ladite couche 110 dans cet exemple de réalisation.

Des essais ont également été réalisés avec des pneumatiques comportant chacun une bande de roulement 101 de ce type, et l'on a ainsi mis en évidence une réduction significative de la décharge électrostatique lors de l'entrée sur les tronçons précités en référence à l'exemple de réalisation de la Fig. 1 et également une réduction significative des éventuelles interférences radio qui en découle.

En référence aux exemples de réalisation qui viennent d'être décrits, on notera que les bandes de roulement 1, 101 selon l'invention confèrent en outre aux pneumatiques les incorporant des pertes hystérétiques réduites en roulage, au même titre qu'une bande de roulement à base de la même matière isolante comprenant une charge renforçante peu hystérétique, telle que de la silice.

On notera par ailleurs que les couches conductrices axiales 10, 110 selon les Figs. 1 et 2 ne présentent pas chacune en pratique une section radiale rigoureusement linéaire comme cela est représenté schématiquement, mais une section plus ou moins irrégulière qui résulte des contraintes de pression inhérentes au moulage du pneumatique. Chaque couche conductrice 10, 110 pourrait par exemple présenter une section radiale sensiblement ondulée, ou en forme de lignes brisées, pourvu qu'elle s'étende entre lesdites faces latérales 4, 104 et 5, 105 et sur toute la circonférence du pneumatique qui l'incorpore.

Les Figs. 1a et 1b, d'une part, et les Figs. 2b, 2c et 2d, d'autre part, illustrent des variantes de réalisation des bandes de roulement représentées aux Figs. 1 et 2, respectivement, les éléments de ces Figs. 1a, 1b, 2b, 2c et 2d qui remplissent des fonctions analogues à celles des éléments des Figs. 1 et 2 étant identifiés par les mêmes références numériques.

Les bandes de roulement 1 des Figs. 1a et 1b, à l'instar de celle de la Fig. 1, sont également telles que la couche conductrice 10 que chacune d'elles comporte relie sensiblement lesdites faces latérales 4 et 5 entre elles.

Plus précisément, la couche 10 de la Fig. 1a est interrompue en regard de chacune des faces latérales 4 et 5 de la bande de roulement 1, c'est-à-dire que chacun des bords latéraux 10a, 10b de ladite couche 10 est distant de la face latérale en regard 4 ou 5.

A titre non limitatif, chaque bord 10a, 10b peut être distant de la face latérale 4 ou 5 en regard d'une distance qui par exemple égale à 5 % de la largeur de la bande de roulement 1, à l'emplacement de ladite couche 10.

On notera qu'une couche 10 selon cette variante de réalisation pourrait être telle qu'un seul de ses bords latéraux 10a ou 10b soit distant de la face latérale 4 ou 5 en regard.

Quant à la couche 10 de la Fig. 1b, elle se différencie de celle de la Fig. 1a en ce qu'elle est en outre interrompue en regard desdites faces interne et externe 2 et 3 de la bande de roulement 1, c'est-à-dire qu'elle présente entre ses bords 10a et 10b une pluralité d'interruptions 10c en forme de sillons circonférentiels.

Les bandes de roulement 101 des Figs. 2a à 2d, à l'instar de celle de la Fig. 2, sont également telles que la couche conductrice 110 que chacune d'elles comporte relie sensiblement lesdites faces latérales 104 et 105 entre elles. On comprendra qu'une bande de roulement 101 selon l'une de ces Figs. 2a à 2d pourrait par exemple être telle que la couche conductrice 110 qu'elle comporte réponde à la description précitée en référence aux Figs. 1a et 1b.

Plus précisément, la bande de roulement 101 de la Fig. 2a se différencie de celle de la Fig. 2, en ce qu'elle comporte entre ses faces latérales 104 et 105, à la place desdits films 114, deux films conducteurs 114' qui relient électriquement les faces interne et externe 102 et 103 de ladite bande de roulement 101 entre elles.

Ces deux films 114' sont dans cet exemple symétriques l'un de l'autre par rapport au plan médian circonférentiel P de cette bande de roulement 101.

On notera qu'une bande de roulement 101 selon cette variante de réalisation pourrait comporter plus de deux films conducteurs 114', et que chaque film 114' pourrait présenter une inclinaison déterminée et autre que celle représentée à la Fig. 2a, par rapport audit plan médian circonférentiel P.

Quant à la bande de roulement 101 de la Fig. 2c, elle se différencie de celle de la Fig. 2a, en ce qu'elle comporte entre ses faces latérales 104 et 105 un seul film conducteur 114' reliant lesdites faces 102 et 103 entre elles, dans cet exemple prévu à l'emplacement dudit plan médian P.

La bande de roulement 101 de la Fig. 2b se différencie de celle de la Fig. 2, en ce qu'elle comporte, d'une part, deux rubans conducteurs internes 114a qui sont respectivement prévus aux emplacements desdites faces latérales 104 et 105 et qui relient ladite couche conductrice 110 à ladite face interne 102 et, d'autre part, un ruban conducteur externe 114b qui est prévu entre lesdites faces latérales 104 et 105 et qui relie ladite couche 110 à ladite face externe 103.

Dans l'exemple de la Fig. 2b, ledit ruban externe 114b est prévu à l'emplacement dudit plan médian circonférentiel P.

On notera cependant qu'une bande de roulement 101 selon cette variante de réalisation pourrait comporter un ou plusieurs rubans externes 114b, chacun pouvant présenter une géométrie et une inclinaison différentes par rapport audit plan P pourvu qu'il relie ladite couche 110 à ladite face externe 103.

Quant à la bande de roulement 101 de la Fig. 2d, elle comporte également un ruban externe 114b tel que celui de la Fig. 2b, mais elle se différencie de celle de la Fig. 2b en ce qu'elle comporte un seul ruban interne 114 qui relie ladite face interne 102 à ladite couche conductrice 110, ledit ruban interne 114a étant prévu entre lesdites faces latérales 104 et 105.

On notera que ces films 114' et ces rubans conducteurs 114a et 114b peuvent présenter une épaisseur différente de celle de ladite ou chaque couche conductrice 110.

Quant à la résistivité desdits films 114' et desdits rubans 114a et 114b, elle est de préférence sensiblement égale à celle de ladite couche 110 dans ces variantes de réalisation.

On va rendre compte à présent d'essais qui ont été réalisés, d'une part, avec un premier train de pneumatiques à bande de roulement 1 selon la Fig. 1 et, d'autre part, avec un second train de pneumatiques à bande de roulement 101 selon la Fig. 2. Ces essais ont été menés en comparaison d'un train « témoin » de pneumatiques, qui est caractérisé par une bande de roulement isolante, de résistivité supérieure ou égale à 10¹³ Ω.cm.

Ces essais ont consisté à quantifier les interférences radio perçues en modulation d'amplitude, lors du roulage d'un véhicule d'essai pourvu successivement de ces trains de pneumatiques, ceci par amplification et analyse des signaux correspondants enregistrés sur haut-parleur.

Ces essais ont été réalisés sous les mêmes conditions météorologiques (température: 17° C, taux d'humidité de l'air extérieur: 18 %, température de point de rosée de l'air extérieur: -7° C) et dans des mêmes conditions de roulage (tronçons de route constitués de plaques d'égout, vitesse de roulage: 70 km/h).

De plus, on a utilisé, pour le récepteur radio embarqué sur le véhicule d'essai, une fréquence de 1386 kHz correspondant à une modulation d'amplitude, avec une même amplification du signal issu du récepteur radio pour tous les essais.

Les pneumatiques de chacun des trains testés présentaient une bande de roulement d'environ 1,2 cm d'épaisseur. Concernant les pneumatiques à bande de roulement 1, 101 selon l'invention qui sont relatifs auxdits premier et second trains, chaque couche conductrice axiale 10, 110 présentait une épaisseur de 0,5 mm et une résistivité sensiblement égale à 10³ Ω.cm.

Concernant la bande de roulement 101 des pneumatiques dudit second train, les deux couches conductrices radiales 114 présentaient par exemple une épaisseur de 0,5 mm, et une résistivité également inférieure ou égale à 10³ Ω.cm.

Quant à la résistivité de ladite matière isolante de chaque bande de roulement 1, 101, elle était prévue égale à celle de chaque bande de roulement dudit train « témoin », c'est-à-dire supérieure ou égale à 10¹³ Ω.cm.

Les résultats de ces essais sont illustrés par les graphiques des Figs. 3, 4 et 5, qui se réfèrent respectivement audit train « témoin », audit premier train et audit second train de pneumatiques, et qui représentent des valeurs moyennes, sur plusieurs roulages, du potentiel du signal enregistré en modulation d'amplitude (exprimé en V) en fonction du temps (exprimé en ms).

On peut voir à la Fig. 3 que, pour le train « témoin » de pneumatiques, le roulage du véhicule sur les éléments métalliques génère sur le haut-parleur des valeurs moyennes d'interférences présentant des amplitudes relativement élevées (1,62 V et 1,79 V, respectivement pour les paires de pneumatiques avant et arrière). Ces valeurs moyennes de potentiel, appelées "Vᵣₘₛ" par l'homme du métier, sont calculées par moyenne quadratique discrète sur une fenêtre temporelle d'acquisition.

Comme on peut le voir à la Fig. 4, le premier train de pneumatiques selon l'invention génère quant à lui des valeurs moyennes d'interférences Vᵣₘₛ dont les amplitudes sont très sensiblement réduites par rapport audit train « témoin » (0,66 V et 0,72 V, respectivement pour les paires de pneumatiques avant et arrière, soit une réduction d'environ 60 %).

Comme on peut le voir à la Fig. 5, le second train de pneumatiques selon l'invention génère des valeurs moyennes d'interférences Vᵣₘₛ dont les amplitudes sont encore réduites par rapport audit premier train (0,16 V et 0,21 V, respectivement pour les paires de pneumatiques avant et arrière, soit une réduction d'environ 90 %).

Comme on peut le voir aux Figs. 4 et 5, on notera que la durée de chacune des interférences relatives auxdits premier et second trains de pneumatiques est également notablement réduite, par rapport au train "témoin".

En conclusion, il résulte de ces essais un confort d'écoute satisfaisant pour le ou les passagers d'un véhicule qui est équipé de pneumatiques selon l'invention.

## Revendications

1. Bande de roulement (1, 101) pour pneumatique, délimitée latéralement par deux faces latérales (4, 104 et 5, 105) reliant des faces radialement interne et externe (2, 102 et 3, 103) entre elles, ladite bande de roulement (1, 101) étant à base d'une matière électriquement isolante, **caractérisée en ce qu'**elle comporte sur sa circonférence au moins une couche conductrice (10, 110) reliant sensiblement lesdites faces latérales (4, 104 et 5, 105) entre elles, ladite couche (10, 110) présentant une résistivité inférieure à celle de ladite matière isolante, laquelle est radialement prévue des deux côtés (11, 111 et 12, 112) de ladite couche (10, 110) dans ladite bande de roulement (1, 101).

2. Bande de roulement (1) selon la revendication 1, **caractérisée en ce que** ladite ou chaque couche conductrice (10) relie sensiblement lesdites faces latérales (4 et 5) entre elles, de telle manière que ladite couche conductrice soit interrompue en regard de l'une au moins de celles-ci.

3. Bande de roulement (1) selon la revendication 1 ou 2, **caractérisée en ce que** ladite ou chaque couche conductrice (10) relie sensiblement lesdites faces latérales (4 et 5) entre elles, de telle manière que ladite couche conductrice soit interrompue en regard desdites faces radialement interne et externe (2 et 3).

4. Bande de roulement (1, 101) selon une des revendications précédentes, **caractérisée en ce que** ladite ou chaque couche conductrice (10, 110) est sensiblement parallèle à ladite face externe (3, 103).

5. Bande de roulement (1, 101) selon une des revendications précédentes, **caractérisée en ce qu'**elle comporte une seule couche conductrice (10, 110) prévue à une distance de l'une et de l'autre desdites faces interne et externe (2, 102, et 3, 103) qui est supérieure ou égale au quart de l'épaisseur de ladite bande de roulement (1, 101).

6. Bande de roulement (1, 101) selon la revendication 5, **caractérisée en ce que** ladite distance est égale à la moitié de l'épaisseur de ladite bande de roulement (1,101).

7. Bande de roulement (1, 101) selon une des revendications précédentes, **caractérisée en ce que** la résistivité de ladite couche conductrice (10, 110) est prévue inférieure ou égale à 10⁸ Ω.cm, la résistivité de ladite matière isolante étant prévue supérieure ou égale à 10⁸ Ω.cm.

8. Bande de roulement (101) selon une des revendications précédentes, **caractérisée en ce qu'**elle comporte au moins un film ou un ruban conducteur (114, 114', 114a, 114b) qui est prévu pour relier électriquement lesdites faces interne et externe (102, 103) entre elles.

9. Bande de roulement (101) selon la revendication 8, **caractérisée en ce qu'**elle comporte deux films conducteurs (114) qui sont respectivement prévus aux emplacements desdites faces latérales (104 et 105).

10. Bande de roulement (101) selon la revendication 9, **caractérisée en ce que** lesdits films (114) se prolongent respectivement sur ladite face externe (103) par deux bandes périphériques circonférentielles (115) électriquement conductrices.

11. Bande de roulement (101) selon la revendication 8, **caractérisée en ce qu'**elle comporte entre lesdites faces latérales (104 et 105) au moins un film électriquement conducteur (114') qui relie lesdites faces interne et externe (102 et 103) entre elles.

12. Bande de roulement (101) selon la revendication 8, **caractérisée en ce qu'**elle comporte, d'une part, au moins un ruban conducteur interne (114a) reliant ladite ou chaque couche conductrice (110) à ladite face radialement interne (102) et, d'autre part, au moins un ruban conducteur externe (114b) reliant ladite ou chaque couche conductrice (110) à ladite face radialement externe (103).

13. Pneumatique, **caractérisé en ce qu'**il comporte une bande de roulement (1, 101) selon une des revendications précédentes.

## Claims

1. A tread (1, 101) for a tyre, defined laterally by two lateral faces (4, 104 and 5, 105) connecting radially inner and outer faces (2, 102 and 3, 103) together, said tread (1, 101) being on the basis of an electrically insulating material, **characterised in that** it comprises on its circumference at least one conductive layer (10, 110) substantially connecting said lateral faces (4, 104 and 5, 105) together, said layer (10, 110) having a resistivity lower than that of said insulating material, which is provided radially on both sides (11, 111 and 12, 112) of said layer (10, 110) in said tread (1, 101).

2. A tread (1) according to Claim 1, **characterised in that** said or each conductive layer (10) substantially connects said lateral faces (4 and 5) together, such that said conductive layer is interrupted opposite at least one of them.

3. A tread (1) according to Claim 1 or 2, **characterised in that** said or each conductive layer (10) substantially connects said lateral faces (4 and 5) together, such that said conductive layer is interrupted opposite said radially inner and outer faces (2 and 3).

4. A tread (1, 101) according to one of the preceding claims, **characterised in that** said or each conductive layer (10, 110) is substantially parallel to said outer face (3, 103).

5. A tread (1, 101) according to one of the preceding claims, **characterised in that** it comprises a single conductive layer (10, 110) provided at a distance from one and the other of said inner and outer faces (2, 102 and 3, 103) which is greater than or equal to one-quarter of the thickness of said tread (1, 101).

6. A tread (1,101) according to Claim 5, **characterised in that** said distance is equal to half the thickness of said tread (1, 101).

7. A tread (1, 101) according to one of the preceding claims, **characterised in that** the resistivity of said conductive layer (10, 110) is made to be less than or equal to 10⁸ Ω.cm, the resistivity of said insulating material being made to be greater than or equal to 10⁸ Ω.cm.

8. A tread (101) according to one of the preceding claims, **characterised in that** it comprises at least one conductive strip or film (114, 114', 114a, 114b) which is provided to connect said inner and outer faces (102, 103) together electrically.

9. A tread (101) according to Claim 8, **characterised in that** it comprises two conductive films (114) which are respectively provided at the locations of said lateral faces (104 and 105).

10. A tread (101) according to Claim 9, **characterised in that** said films (114) are extended respectively on said outer face (103) by two electrically conductive circumferential peripheral bands (115).

11. A tread (101) according to Claim 8, **characterised in that** it comprises, between said lateral faces (104 and 105), at least one electrically conductive film (114') which connects said inner and outer faces (102 and 103) together.

12. A tread (101) according to Claim 8, **characterised in that** it comprises, firstly, at least one inner conductive strip (114a) connecting said or each conductive layer (110) to said radially inner face (102) and, furthermore, at least one external conductive strip (114b) connecting said or each conductive layer (110) to said radially outer face (103).

13. A tyre, **characterised in that** it comprises a tread (1, 101) according to one of the preceding claims.

## Patentansprüche

1. Lauffläche (1, 101) für Reifen, die seitlich von zwei Seiten (4, 104 und 5, 105) festgelegt wird, welche die radial innere und äußere Seite (2, 102 und 3, 103) miteinander verbinden, wobei die Lauffläche (1, 101) auf der Basis von elektrisch isolierendem Material hergestellt ist, **dadurch gekennzeichnet, dass** sie an ihrem Umfang mindestens eine leitende Schicht (10, 110) aufweist, die die Seiten (4, 104 und 5, 105) im Wesentlichen miteinander verbindet, wobei die Schicht (10, 110) eine geringere Resistivität als das isolierende Material aufweist, das radial beidseitig (11, 111 und 12, 112) der Schicht (10, 110) in der Lauffläche (1, 101) vorgesehen ist.

2. Lauffläche (1) nach Anspruch 1, **dadurch gekennzeichnet, dass** die oder jede leitende Schicht (10) die Seiten (4 und 5) im Wesentlichen derart miteinander verbindet, dass die leitende Schicht zumindest einer der Seiten gegenüberliegend unterbrochen ist.

3. Lauffläche (1) nach Anspruch 1 oder 2, **dadurch gekennzeichnet, dass** die oder jede leitende Schicht (10) die Seiten (4 und 5) im Wesentlichen derart miteinander verbindet, dass die leitende Schicht der radial inneren und äußeren Seite (2 und 3) gegenüberliegend unterbrochen ist.

4. Lauffläche (1, 101) nach einem der vorhergehenden Ansprüche, **dadurch gekennzeichnet, dass** die oder jede leitende Schicht (10, 110) im Wesentlichen parallel zur äußeren Seite (3, 103) ist.

5. Lauffläche (1, 101) nach einem der vorhergehenden Ansprüche, **dadurch gekennzeichnet, dass** sie nur eine leitende Schicht (10, 110) aufweist, die in einem Abstand von der inneren und äußeren Seite (2, 102 und 3, 103) vorgesehen ist, der größer oder gleich dem Viertel der Dicke der Lauffläche (1, 101) ist.

6. Lauffläche (1, 101) nach Anspruch 5, **dadurch gekennzeichnet, dass** der Abstand der Hälfte der Dicke der Lauffläche (1, 101) entspricht.

7. Lauffläche (1, 101) nach einem der vorhergehenden Ansprüche, **dadurch gekennzeichnet, dass** die Resistivität der leitenden Schicht (10, 110) kleiner oder gleich 10⁸, Ω·cm und die Resistivität des isolierenden Materials größer oder gleich 10⁸ Ω·cm ist.

8. Lauffläche (101) nach einem der vorhergehenden Ansprüche, **dadurch gekennzeichnet, dass** sie mindestens eine leitende Folie oder ein leitendes Band (114, 114', 114a, 114b) aufweist, das die innere und äußere Seite (102, 103) elektrisch miteinander verbindet.

9. Lauffläche (101) nach Anspruch 8, **dadurch gekennzeichnet, dass** sie zwei leitende Folien (114) aufweist, die an den Seiten (104 und 105) angeordnet sind.

10. Lauffläche (101) nach Anspruch 9, **dadurch gekennzeichnet, dass** sich die Folien (114) an der äußeren Seite (103) mit zwei elektrisch leitenden peripherischen Umfangsstreifen (115) fortsetzen.

11. Lauffläche (101) nach Anspruch 8, **dadurch gekennzeichnet, dass** sie zwischen den Seiten (104 und 105) mindestens eine elektrisch leitende Folie (114') aufweist, die die innere und äußere Seite (102, 103) miteinander verbindet.

12. Lauffläche (101) nach Anspruch 8, **dadurch gekennzeichnet, dass** sie zum einen mindestens ein inneres leitendes Band (114a), das die oder jede leitende Schicht (110) mit der radial inneren Seite (102) verbindet, und zum anderen mindestens ein äußeres leitendes Band (114b) aufweist, das die oder jede leitende Schicht (110) mit der radial äußeren Seite (103) verbindet.

13. Reifen, **dadurch gekennzeichnet, dass** er eine Lauffläche (1, 101) nach einem der vorhergehenden Ansprüche aufweist.
